(19) **Europäisches Patentamt**

**European Patent Office**

**Office européen des brevets**

(11) **EP 0 593 850 B1**

(12) **EUROPEAN PATENT SPECIFICATION**

(45) Date of publication and mention
of the grant of the patent:
**29.09.1999 Bulletin 1999/39**

(51) Int Cl.⁶: **H04B 1/66**

(21) Application number: **93110215.6**

(22) Date of filing: **25.06.1993**

(54) **Method and apparatus for subband filtering of a stereo audio signal**

Verfahren und Einrichtung zur Subbandfilterung eines Stereoaudiosignals

Procédé et appareil pour la filtrage en sous-bandes d'un signal audio en stéreo

(84) Designated Contracting States:
**DE FR GB**

(30) Priority: **20.10.1992 KR 1922192**

(43) Date of publication of application:
**27.04.1994 Bulletin 1994/17**

(73) Proprietor: **SAMSUNG ELECTRONICS CO., LTD.
Suwon-city, Kyungki-do 441-373 (KR)**

(72) Inventor: **Chung, Byung-gook
Seoul (KR)**

(74) Representative: **Grünecker, Kinkeldey,
Stockmair & Schwanhäusser Anwaltssozietät
Maximilianstrasse 58
80538 München (DE)**

(56) References cited:
**US-A- 4 868 868**

## Description

The present invention relates to a method of and an apparatus for performing subband encoding of a stereo audio signal according to claim 1 and the preamble of claim 2.

The present invention not only can be used in a field where subband filtering is necessary for a digital compact cassette, a mini disk, etc., but also in convolution processing using a finite impulse response filter (hereinafter called an FIR filter). For simplifying the description of the present invention, examples of the subband coding (SBC) are described below.

Subband coding is a method in which an audio signal is divided into a plurality of frequency bands, and the respective bands are down-sampled using a Nyquist frequency to be converted into low-band signals which are then coded by adaptive differential pulse code modulation. When coding the subbands, a certain number of quantization bits is assigned to the subband where the audio energy is concentrated, thereby enhancing the overall sound quality of the audio signal. Also, since quantization noise is generated only in the divided subband, the generated quantization noise does not influence the other bands.

A subband coding is explained with reference to European Patent Application No. 289,080 A1 (88,04,20) published on 2 November 1988. In a subband coding, the frequency band of an audio signal is divided into a plurality of subbands, and the subband has a frequency range well adapted to the human auditory system, that is, the critical band. This division is based on psychoacoustic experimentation, so that the quantization noise levels in the respective subbands can be optimally attenuated when the quantization is achieved following the noise mask curve of the human auditory system.

FIG.1 shows a portion of the frequency spectrum of a subband divided by an SBC system. In the SBC system, an audio signal is to be divided into a number of subbands as shown in FIG.1. The subband signals are then respectively encoded and decoded.

FIG.2 is a block diagram showing the circuit composition of an SBC system. The operation in the circuit according to FIG.2 is explained with reference to FIGs.3 to 7.

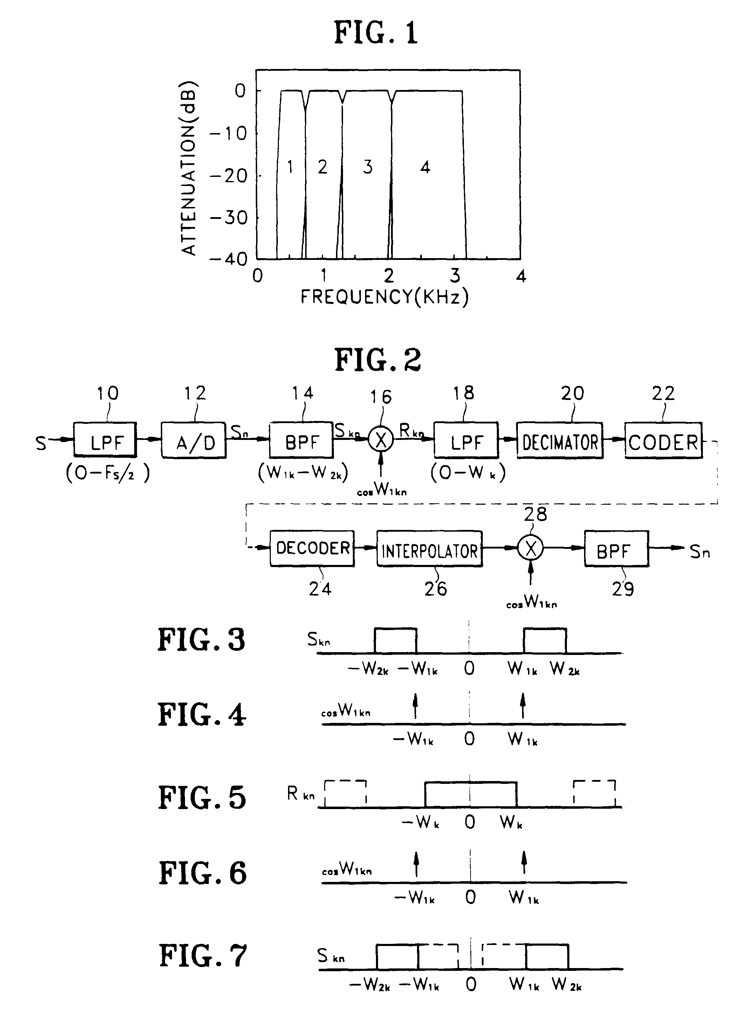

An audio signal S from an audio source, e.g., a microphone (not shown), is input to a low-pass filter 10. Low-pass filter 10 generates an audio signal of which the frequency components higher than $F_s/2$ are eliminated (Here, $F_s$ is the frequency at which the audio signal is sampled), and the signal is output to an A/D converter 12. A/D converter 12 converts the input analog signal into a digital signal Sn, and outputs the digital signal to a bandpass filter 14. From digital signal Sn, bandpass filter 14 extracts a signal $S_{kn}$ having a bandwidth of $W_{1k}$ to $W_{2k}$ as shown in FIG.3, and provides the signal to a cosine modulator 16. Cosine modulator 16 modulates the band signal ($W_{1k}-W_{2k}$) into a cosine wave having a frequency $W_{1k}$ as shown in FIG.4, and frequency-converts the wave into a signal $R_{kn}$ whose frequency band is from 0Hz to $W_k$ as shown in FIG.5. The unnecessary part resulting from harmonics and shown as a dashed line in FIG.5 is removed by a low-pass filter 18. Then, a decimator 20 down-samples the frequency-converted signal $R_{kn}$ and outputs it to a coder 22 which encodes the decimated signal to be output. The encoded signal is decoded by a decoder 24 and an interpolator 26 interpolates the decimated signal, so as to restore the signal having been originally sampled. The signal from interpolator 26 is sent to modulator 28 to be modulated by means of the cosine wave of $W_{1k}$ as illustrated in FIG.6. Modulator 28 reconstructs the signal of 0-$W_{1k}$ band into the signal of the original band ($W_{1k}-W_{2k}$) as shown in FIG.7. The original band $W_{1k}-W_{2k}$ is passed by a bandpass filter 29, with all other frequencies being removed.

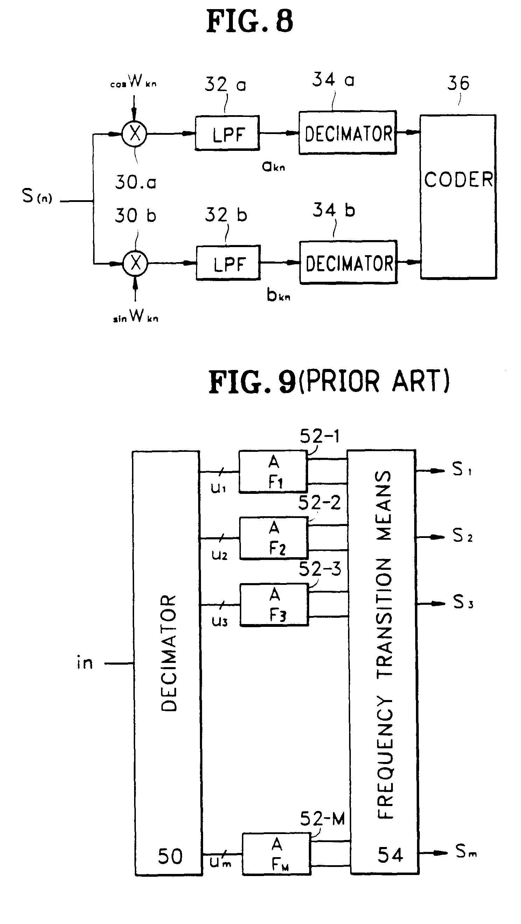

FIG.8 shows another embodiment of an SBC system, which is the same as that of FIG.1. Here, bandpass filter 14 has been eliminated, so as to suggest a system of simpler circuitry.

Relating to FIG.8, a digital signal Sn is complex-modulated by a complex signal $e^{j\omega kn}$ (given, $\omega_k=W_{1k}+W_{2k}$). Complex-modulation is achieved by cosine modulator 30a for cosine-modulating with the factor of $cos(\omega kn)$ and sine modulator 30b for sine-modulating with the factor of $sin(\omega kn)$. The output of modulators 30a and 30b are converted into a signal whose bandwidth is from 0Hz to $W_k/2$ by low-pass filters 32a and 32b. A real part $a_{kn}$ of a complex signal is output from low-pass filter 32a and an imaginary part $b_{kn}$ thereof is output from the other low-pass filter 32b. Signals $a_{kn}$ and $b_{kn}$ are decimated by decimators 34a and 34b and encoded by coder 36 to be output.

Where $F_s$ is a sampling frequency of an input signal and $F_p$ is the frequency band of a given subband, as it is known by Nyquist's sampling theorem that, if the output of the low-pass filter is re-sampled by the decimated sampling rate $f_D$ (given, $f_D \geq F_p$), necessary and sufficient condition is conserved. In most cases, to simplify the processing, a decimated sampling rate $f_D$ is determined to be 1/Dth of sampling frequency $F_s$ (given, D>0). For example, if $F_s$ is 10KHz and $F_p$ is 1KHz, the low-pass filter output can be decimated by sampling every tenth pulse. This decimation is realized by an FIR filter.

A general FIR filter response $y_n$ can be determined by

$$y_n = \sum_{m=0}^{M-1} h_m x_{n-m} \qquad\qquad \ldots(1)$$

FIR filter coefficient $h_m$ is determined by the impulse response of a necessary low-pass filter. The output of the FIR filter is not determined by the past output of this filter. If the filter output is decimated by the factor D, it is necessary to sample every Dth output thereof. The FIR filter can perform sine and cosine modulation in addition to low-band pass filtering and decimation.

In a cosine modulation, the FIR filter response is determined by

$$y_n = \sum_{m=0}^{M-1} h_m x_{n-m} \cos \omega_k (n-m) T_s \qquad\qquad \ldots(2)$$

where, $\omega_k$ is a center frequency of a given channel and $T_s$ is a sampling period of an input signal $X_n$. As described above, the output of a low-pass filter is decimated so that by letting n=Dn', Equation 2 can be rewritten as

$$y_{Dn'} = \sum_{m=0}^{M-1} h_m x_{Dn'-m} \cos \omega_k (Dn'-m) T_s \qquad\qquad \ldots(3)$$

If a decimation factor D and a frequency $F_k$ have the relationship

$$D = \left[ \frac{f_s}{F_k} \right] J \qquad\qquad \ldots(4)$$

and J is selected to be a positive integer, Equation 3 can be rewritten as

$$y_{Dn'} = \sum_{m=0}^{M-1} h_m x_{Dn'-m} \cos \left[ 2\pi \frac{m}{D} \right] J \qquad\qquad \ldots(5)$$

The cosine coefficient is obviously irrespective to n' as shown in Equation 5. Further, by substituting the variable $C_m$ for the term $h_m cos[2\pi(m/D)J]$, Equation 5 can be rewritten as

$$y_{Dn'} = \sum_{m=0}^{M-1} C_m x_{Dn'-m} \qquad\qquad \ldots(6)$$

The FIR filter performs the operation of Equation 6 by accumulating the product of the coefficient $C_m$ stored in a memory and the input value $x_{Dn'-m}$. Sine modulation is performed as described above, and thereby modulation (cosine/sine modulation), low-pass-filtering and decimation can be executed simultaneously by an FIR filter.

FIG.9 is a block diagram showing an SBC system adopting the conventional dividing filter and the frequency

EP 0 593 850 B1

translation means, which is disclosed in European Patent No. 0,400,755 A1 (90.5.30) published on 5 December 1990. Relating to FIG.9, input signal IN has the frequency band of sampling frequencies $F_s$ and $F_s/2$. Decimator 50 generates the signal Um ($1 \leq m < M$) which has been obtained by decimating the input signal thereof by a factor D and outputs the signal to dividing filter 52. Dividing filter 52 generates two quadrature-mirror-filtered (QMF) signals in response to the decimated signal Um and outputs the signals to frequency translation 54. Frequency translation means 54 outputs by forming M subband signals from 2M QMF-filtered signals.

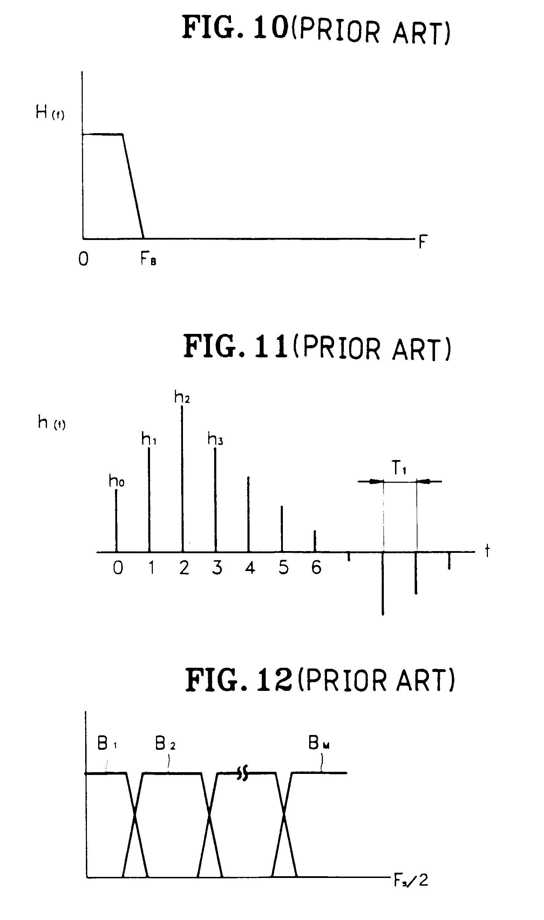

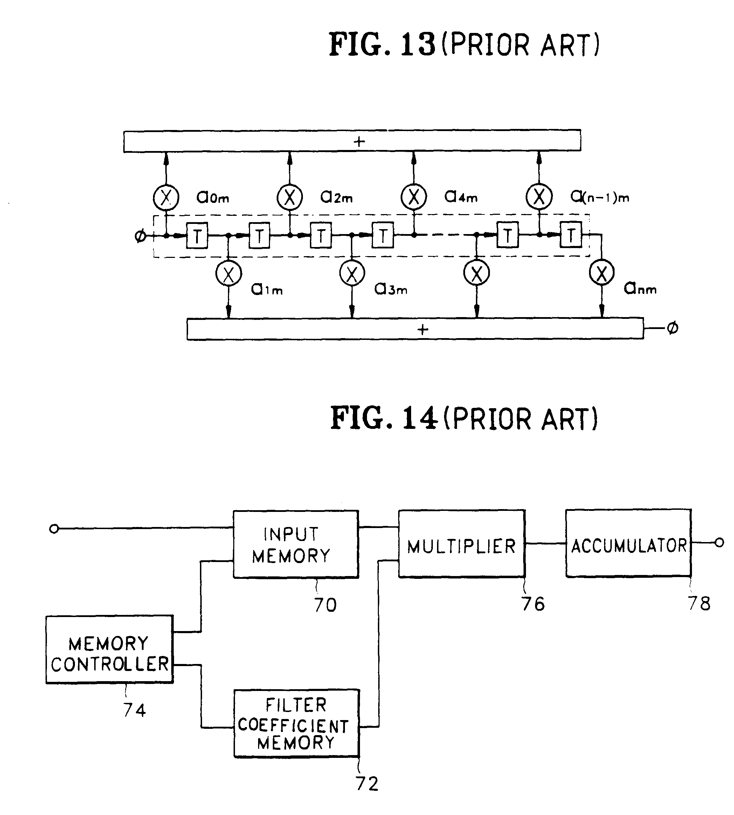

FIG.10 shows the frequency response characteristic of dividing filter 52-1 shown in FIG.9. In general, subband coding system makes use of QMF-filtering for canceling the return components by basically dividing the band into two division units. FIG.11 shows an impulse response of the dividing filter shown in FIG.10. FIG.12 shows a frequency response characteristic for all of the dividing filters shown in FIG.9. FIG.13 is a block diagram showing the detailed composition of any of dividing filters of FIG.9.

FIG. 14 is a block diagram showing an integrated circuit in which a dividing filter shown in FIG.13, is realized to be exclusively used for digital signal processing (DSP). A dividing filter shown in FIG.14 has input memory 70 for storing the decimated audio data therein, coefficient memory 72 for storing the coefficients shown in FIG.11 therein, memory controller 74 for controlling the address designation and read/write operations of input memory 70 and coefficient memory 72, multiplier 76 for multiplying the audio data from input memory 70 by the filter coefficient from coefficient memory 72, and accumulator 78 for accumulating therein the operation results from multiplier 76.

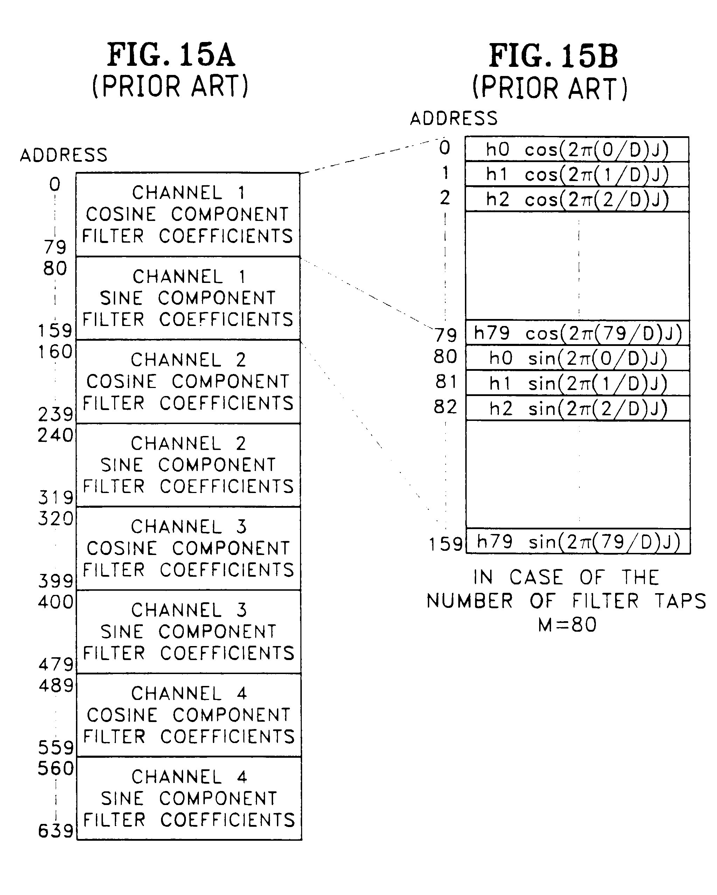

FIGs.15A and 15B are the memory maps showing the recorded contents in coefficient memory 72 of the dividing filter system in FIG. 14. FIG.15A shows a memory map of the entire coefficient memory and FIG.15B shows a detailed composition of the cosine and sine coefficients according to the first channel of the memory map, where M is the number of FIR filter taps, coefficient memory 72 has M filter coefficients for each sine coefficient and M filter coefficients for each cosine coefficient.

When the above-described conventional SBC system is applied to a multi-channel audio signal, and more particularly to a stereo audio signal having left and right channels, each SBC system should be comprised of respective channels which increases the hardware and power consumption.

In addition, the number of FIR filter taps has to be increased in order to maintain high sound quality. In these cases, as the number of taps increases, the capacity of the coefficient memory needs to be enlarged and the operation speed increased, which is costly.

To solve the above problems, it is recommended that each channel be processed through time division multiplexing (TDM). However, this reveals demerits in that a hi-fi audio signal is unable to be processed because when the TDM method is used, a high-frequency system clock is necessary.

From US 4,868,868 a subband speech analysing and synthesising device is known, in which a low-pass filter comprises a non-recursive filter. The centre frequency and bandwidth of each channel are selected so that the decimated sampling period of that channel is an integer multiple of the period of the modulating signal or the demodulating signal of the channel. Modulation or demodulation is performed simultaneously with the low-pass filtering by the non-recursive filter.

It is the object of the present invention to provide a method for simplifying subband filtering of a stereo audio signal and an apparatus for performing said method.

This object is solved by the subject matter of independent method claim 1 and of independent apparatus claim 2.

In the following preferred embodiments of the invention will be described in more detail by referring to the accompanied figures, wherein

FIG.1 shows the frequency divisions of a subband divided by a subband coding (SBC) system, the system being applicable to both of the conventional technology and the present invention;
FIG.2 is a block diagram showing the basic composition of an SBC system, the system being applicable to both of the conventional technology and the present invention;
FIGs.3 to 7 are diagrams showing the spectral relationships of signals at various points of the SBC system shown in FIG.2, and more particularly, FIG.3 showing the output signal of a bandpassfilter BPF, FIG.4 showing the carrier wave input to the cosine modulator, FIG.5 showing the output of the cosine modulator, FIG.6 showing a reproduced carrier wave of the modulator, and FIG.7 showing the output of the modulator;
FIG.8 is a block diagram showing an embodiment of an SBC system, the system applicable to both of the conventional technology and the present invention;
FIG.9 is a block diagram showing an SBC system including the conventional dividing filter and the frequency transition means;
FIG.10 shows the frequency response characteristic of a dividing filter 52-1 of FIG.9;
FIG.11 shows an impulse response characteristic of the dividing filter 52-1 of FIG.9;
FIG. 12 shows the frequency response characteristic of all of dividing filters 52-1 through 52-M shown in FIG.9;

4

FIG.13 is a block diagram showing the detailed composition of any dividing filter shown in FIG.9;

FIG.14 is a block diagram showing an integrated circuit in which the dividing filter of FIG.13 is realized exclusively for digital signal processing;

FIG.15A is a memory map showing the recorded content of the coefficient memory of the dividing filter shown in FIG.14;

FIG.15B shows a detailed composition of the cosine and sine coefficients of the first channel of the memory maps shown in FIG.15A;

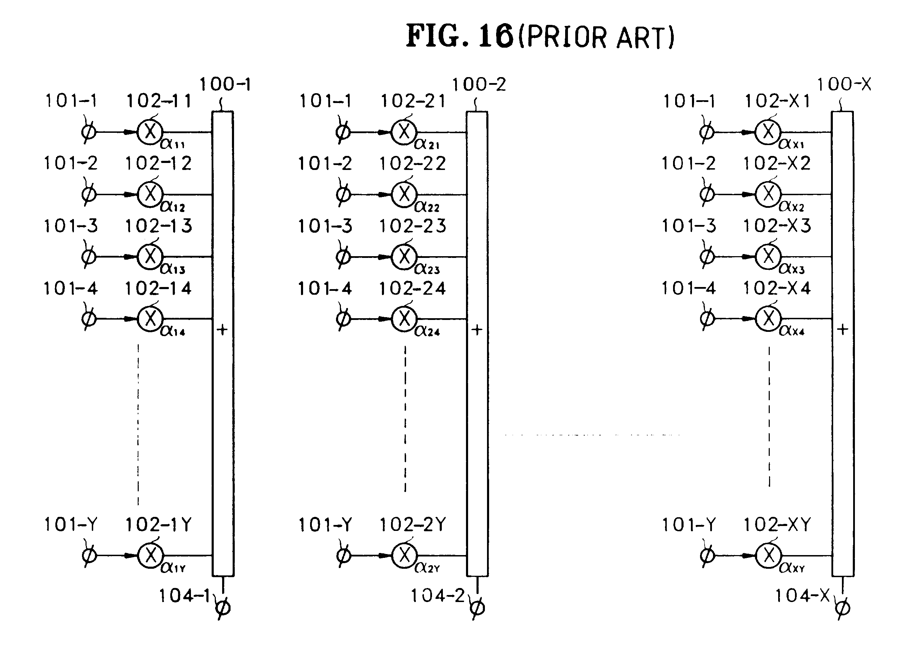

FIG.16 is a block diagram showing a detailed composition of the frequency transition means among the SBC system shown in FIG.9;

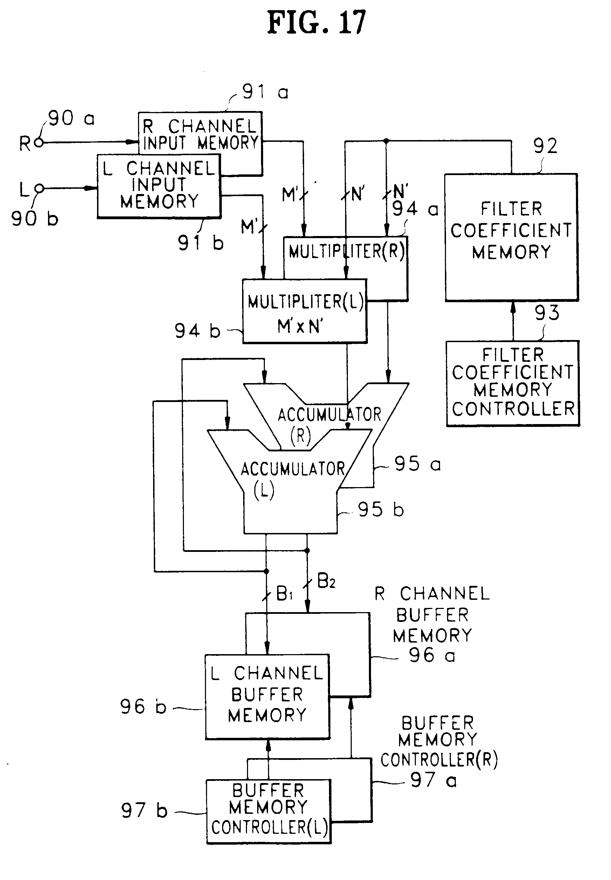

FIG.17 is a block diagram showing an embodiment of the subband filtering apparatus for the stereo audio signal according to the present invention, which embodies the dividing filter;

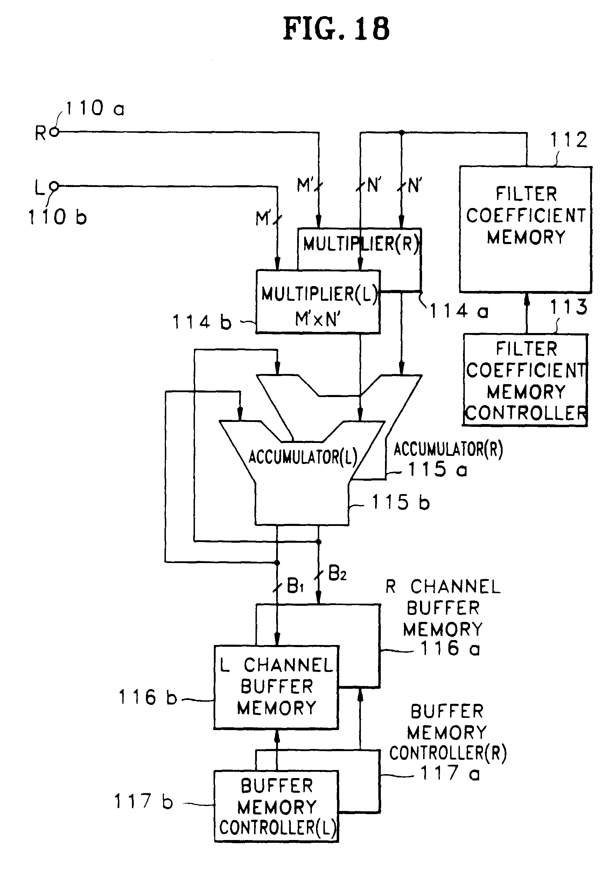

FIG.18 is a block diagram showing another embodiment according to the subband filtering apparatus for the stereo audio signal of the present invention, which embodies the frequency transition means;

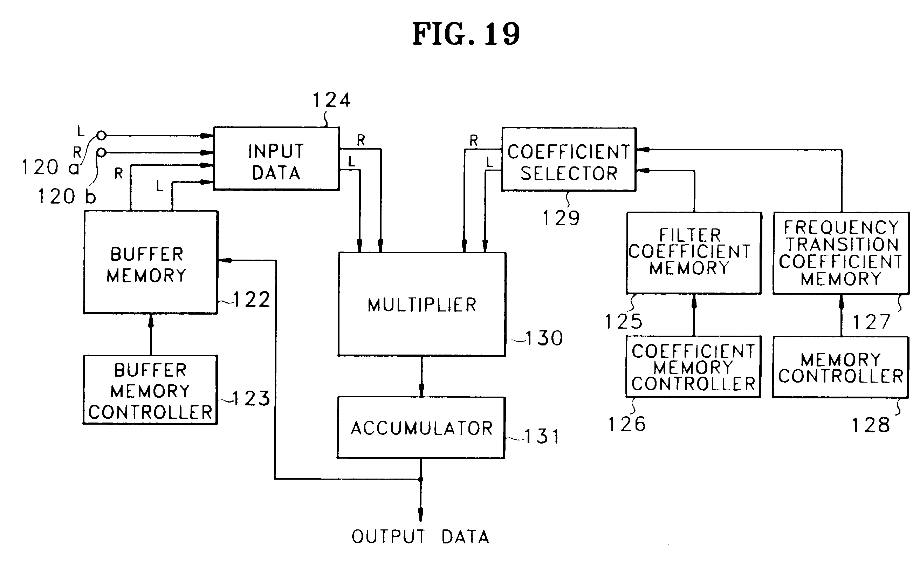

FIG.19 is a block diagram showing another embodiment according to the subband filtering apparatus for the stereo audio signal of the present invention, the embodiment constructed as into the forms of the dividing filter and the frequency transition means commonly sharing a multiplier and an accumulator; and

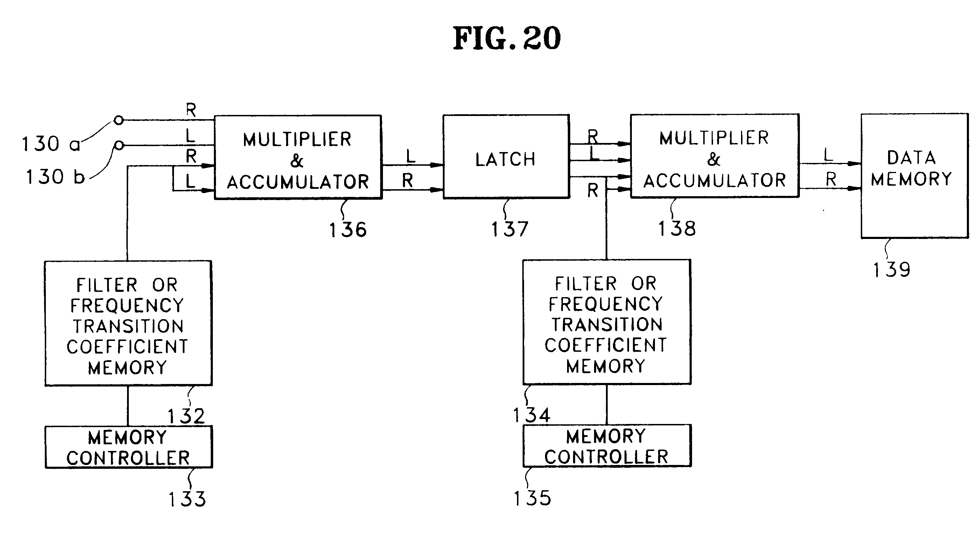

FIG.20 is a block diagram showing another embodiment for the subband filtering apparatus for the stereo audio signal, according to the present invention, in which the dividing filter and the frequency transition means are connected in series.

Given that the response characteristic of an FIR filter with respect to decimation and low-pass-filtering of an audio signal is determined by the foregoing Equation 6, the response characteristics of left- and right-channel stereo audio signals are determined by

$$y_{L(Dn')} = \sum_{m=0}^{M-1} C_m x_{L(Dn'-m)} \qquad \ldots(7)$$

and

$$y_{R(Dn')} = \sum_{m=0}^{M-1} C_m x_{R(Dn'-m)} \qquad \ldots(8)$$

That is, by adopting a coefficient $C_m$ for each, it is possible to simultaneously process both left and right audio signals, by inputting one coefficient read from the same memory area to left- and right-channel multipliers. Likewise, for frequency translation in connection with a decimation filter, it is possible to process the signals by jointly sharing the required coefficient.

FIG.16 is a block diagram showing the detailed composition of the frequency translation means of the SBC system shown in FIG.9. which comprises X signal mixers and receives Y inputs (X=M and Y=2M), wherein the inputs are received by respective processors 100-1~100-X For odd x values, a coefficient $\alpha_{xy}$ for respective multipliers is $cos\phi$, and is $sin\phi$ when the x value is even. Here, the variable $\phi$ is defined as

$$\phi = (-1)^{x-1}\pi\left(x - \frac{1}{2}\right) \times \left(\frac{1}{2} - \frac{y-1}{2M}\right) \qquad \ldots(9)$$

FIG.17 is a block diagram showing an embodiment of the subband filtering apparatus for the stereo audio signal, according to the present invention, which embodies the dividing filter. The dividing filter constructed as shown in FIG.17 is for simultaneously decimating and low-pass-filtering the stereo audio signal.

The filter comprises input memories 91a and 91b for storing left and right audio data flowed in through input terminals 90a and 90b therein, coefficient memory 92 for storing the necessary coefficients therein, memory controller 93 for controlling the address designation and read/write operations of input memories 91a and 91b and coefficient memory 92, multipliers 94a and 94b for multiplying the audio data from input memories 91a and 91b and the filter coefficient from coefficient memory 92, and accumulators 95a and 95b for accumulating the operation results from multipliers 94a and 94b thereto. Buffer memories 96a and 96b and buffer controllers 97a and 97b store the results from accumulators 95a and 95b therein.

In the operation of the dividing filter shown in FIG.17, the filter coefficient from coefficient memory 92 is simultaneously transferred to a pair of multipliers 94a and 94b, and the results of multipliers 94a and 94b are accumulated at accumulators 95a and 95b. The results of accumulators 95a and 95b are stored in buffer memories 96a and 96b through respective output buses B1 and B2. The apparatus according to FIG.17 performs division-filtering in parallel for left- and right-channel audio signals, thereby minimizing the coefficient memory capacity, and enabling the system clock to be the same as that for single-channel processing.

FIG. 18 is a block diagram showing another embodiment of the subband filtering apparatus for the stereo audio signal according to the present invention, wherein the frequency translation means is realized. Here, the frequency translation means comprises coefficient memory 112 for storing necessary coefficients, memory controller 113 for controlling the address designation and read/write operations of coefficient memory 112, multipliers 114a and 114b for multiplying the filtered signal input through tenninals 110a and 110b by the filter coefficient from coefficient memory 112, and accumulators 115a and 115b for accumulating therein the operation results from accumulators 114a and 114b. Buffer memories 116a and 116b and buffer controllers 117a and 117b store the results of accumulators 115a and 115b.

FIG.19 is a block diagram showing another embodiment of the subband filtering apparatus for the stereo audio signal according to the present invention, wherein the dividing filter and the frequency translation means jointly share a multiplier and an accumulator.

The apparatus shown in FIG.19 comprises buffer memory 122 for storing the signal filtered by the dividing filter, buffer memory controller 123 for controlling the address designation and read/write operations of buffer memory, input data selector 124 for selectively outputting left and right audio data input through terminals 120a and 120b and the filtered signal from buffer memory 122, filter coefficient memory 125 for storing the coefficients necessary for filtering, filter coefficient memory controller 126 for controlling the address designation and read/write operations of filter coefficient memory 125, frequency translation coefficient memory 127 for storing the coefficients needed for frequency translation, memory controller 128 for controlling the address designation and read/write operations of frequency translation coefficient memory 127, coefficient selector 129 for selectively outputting the filter coefficients from filter coefficient memory controller 126 and the frequency translation coefficient from frequency translation coefficient memory 127, multiplier 130 for multiplying the coefficients froin coefficient selector 129 and the audio data from input data selector 124, and accumulator 131 for accumulating therein the operation results from multiplier 130.

FIG.20 is a block diagram showing another embodiment of the subband filtering apparatus for the stereo audio signal, according to the present invention, wherein the dividing filter and the frequency translation means are connected in series.

To accomplish the aforementioned second object, the subband filtering apparatus for stereo audio signals according to the present invention comprises an input memory 137 for storing the audio data input through the input terminals therein; a coefficient memory 134 for storing the filter coefficients therein; a memory controller 133 for controlling address designation and the read/write operation for the input memory and the coefficient memory; a multiplier 138 for multiplying the audio data from the input memory 137 by the filter coefficient from the coefficient memory; 134 and an accumulator 138 for accumulating the results obtained by the multiplier.

A method of subband-filtering the stereo audio signal, according to the present invention, jointly shares the filter coefficients which are used in the filtering of stereo L- and R-channels, and simultaneously performs the stereo L-and R-channel filtering.

Moreover, a subband filtering apparatus for the stereo audio signal, according to the present invention, reads out the filter coefficient from the memory area by means of the memory controller. and processes the L- and R-stereo audio signal in parallel, by commonly using the filter coefficient.

Furthermore, the subband filtering apparatus for the stereo audio signai, according to the present invention, reads the filter coefficients from the memory area by a memory controller and processes in parallel the left- and right-channel stereo audio signals by jointly sharing the filter coefficients, thereby coefficient memory can be economically used so as to achieve high integration of the hardware. Especially, a simplified DSP integrated circuit is provided when signal-processing by way of the TDM method is impossible. Also, when the TDM method is possible, very high power consumption is inevitable, and so the present invention in effect eliininates the need for the TDM method altogether.

While the present invention has been particularly shown and described with reference to particular embodiments applied to a decimation filter and a frequency translation means for performing subband filtering, it will be understood by those skilled in digital signal processing that the concept of the present invention may be adopted in every field of performing the same filtering process with respect to a multi-channel input signal.

**Claims**

1. A subband encoding method for a stereo audio signal, comprising the steps of:

   selecting a single set of filter coefficients used for a stereo L-channel filtering as well as for a stereo R-channel filtering; and

   simultaneously performing stereo L-and R-channel filtering using said set of filter coefficients.

2. An apparatus for performing subband encoding of a first audio signal, comprising:

   a first input memory (91a) for storing first audio data inputted through an input terminal (90a) thereof;

   a coefficient memory (92) for storing a set of filter coefficients therein;

   a memory controller (93) for controlling address designation and read/write operations of said first input memory (91a) and said coefficient memory (92);

   a first multiplier (94a) for multiplying the first audio data from said first input memory (91a) by said set of filter coefficients outputted from said coefficient memory (92); and

   a first accumulator (95a) for accumulating the operation results from said first multiplier (94a);

   characterised by the following means for simultaneously and in parallel encoding a second audio signal:

   a second input memory (91b) for storing second audio data inputted through an input terminal (90b) thereof and which read/write operations are controlled by said memory controller (93);

   a second multiplier (94b) for multiplying the second audio signal by said set of filter coefficients outputted form said coefficient memory (92); and

   a second accumulator (95b) for accumulating the operation results from said second multiplier (94b);

   wherein the first audio signal represents the right (R) channel of a stereo audio signal and the second audio signal represents the left (L) channel of the stereo audio signal.

3. An apparatus as claimed in claim 2, wherein said stereo audio signal is decimated and low pass filtered.

4. An apparatus as claimed in claim 2 or 3, wherein said set of filter coefficients is adapted to perform a frequency translation.

**Patentansprüche**

1. Teilbandcodierungsverfahren für ein Stereo-Audiosignal mit den Schritten:

   Auswählen eines einzelnen Satzes von Filterkoeffizienten, welcher sowohl für eine Filterung eines Stereo-L-Kanals wie auch für eine Filterung eines Stereo-R-Kanals verwendet wird; und

   gleichzeitiges Durchführen einer Stereo-L- und einer -R-Kanalfilterung unter Verwendung des Satzes von Filterkoeffizienten.

2. Vorrichtung zum Ausführen einer Teilbandcodierung eines ersten Audiosignals, mit:

   einem ersten Eingabespeicher (91a) zum Speichern erster Audiodaten, welche durch einen Eingangsanschluß (90a) davon eingegeben werden;

   einem Koeffizientenspeicher (92) zum Speichern eines Satzes von Filterkoeffizienten darin;

einer Speichersteuerung (93) zum Steuern der Adressbezeichnung und von Lese/Schreibvorgängen des ersten Eingabespeichers (91a) und des Koeffizientenspeichers (92);

einem ersten Multiplizierer (94a) zum Multiplizieren der ersten Audiodaten aus dem ersten Eingabespeicher (91a) mit dem Satz von Filterkoeffizienten, welche von dem Koeffizientenspeicher (92) ausgegeben werden; und

einem ersten Akkumulator (95a) zum Aufsummieren der Berechnungsergebnisse des ersten Multiplizierers (94a);

**gekennzeichnet durch** die folgenden Einrichtungen zum gleichzeitigen und parallelen Codieren eines zweiten Audiosignals:

einen zweiten Eingabespeicher (91b) zum Speichern zweiter Audiodaten, welche durch einen zweiten Eingangsanschluß (90b) davon angegeben werden und dessen Lese/Schreibvorgänge durch die Speichersteuerung (93) gesteuert werden;

einen zweiten Multiplizierer (94b) zum Multiplizieren des zweiten Audiosignals mit dem Satz von Filterkoeffizienten, welcher von dem Koeffizientenspeicher (92) ausgegeben wird; und

einen zweiten Akkumulator (95b) zum Aufsummieren der Berechnungsergebnisse des zweiten Multiplizierers (94b);

wobei das erste Audiosignal den rechten (R) Kanal eines Stereo-Audiosignals repräsentiert und wobei das zweite Audiosignal den linken (L) Kanal des Stereo-Audiosignals repräsentiert.

3. Vorrichtung nach Anspruch 2, worin das Stereo-Audiosignal dezimiert und tiefpaßgefiltert wird.

4. Vorrichtung nach Anspruch 2 oder 3, worin der Satz von Filterkoeffizienten ausgebildet ist, um eine Frequenztransformation durchzuführen.

**Revendications**

1. Procédé de codage de sous-bandes d'un signal audio stéréophonique, comprenant les étapes consistant :

à sélectionner un seul ensemble de coefficients de filtrage utilisés pour un filtrage de voie gauche stéréophonique ainsi que pour un filtrage de voie droite stéréophonique ; et
à effectuer simultanément un filtrage de voies gauche et droite stéréophoniques en utilisant ledit ensemble de coefficients de filtrage.

2. Appareil destiné à effectuer un codage de sous-bandes d'un premier signal audio, comprenant :

une première mémoire d'entrée (91a) destinée à mémoriser des premières données audio entrées à travers une borne d'entrée (90a) ;
une mémoire de coefficients (92) destinée à y mémoriser un ensemble de coefficients de filtrage ;
un contrôleur de mémoire (93) destiné à commander des opérations de désignation d'adresse et de lecture/écriture de ladite première mémoire d'entrée (91a) et de ladite mémoire de coefficients (92) ;
un premier multiplicateur (94a) destiné à multiplier les premières données audio provenant de ladite première mémoire d'entrée (91a) par ledit ensemble de coefficients de filtrage délivré par ladite mémoire de coefficients (92) ; et
un premier accumulateur (95a) destiné à cumuler les résultats d'opérations provenant dudit premier multiplicateur (94a) ;

caractérisé par les moyens suivants destinés à coder simultanément et parallèlement un second signal audio :

une seconde mémoire d'entrée (91b) destinée à mémoriser des secondes données audio entrées à travers une borne d'entrée (90b) et dont les opérations de lecture/écriture sont commandées par ledit contrôleur de mémoire (93) ;

un second multiplicateur (94b) destiné à multiplier le second signal audio par ledit ensemble de coefficients de filtrage délivré par ladite mémoire de coefficients (92) ; et

un second accumulateur (95b) destiné à cumuler les résultats d'opérations provenant dudit second multiplicateur (94b) ;

dans lequel le premier signal audio représente la voie droite (D) d'un signal audio stéréophonique et le second signal audio représente la voie gauche (G) du signal audio stéréophonique.

3. Appareil selon la revendication 2, dans lequel ledit signal audio stéréophonique est décimé et est soumis à un filtrage passe-bas.

4. Appareil selon la revendication 2 ou 3, dans lequel ledit ensemble de coefficients de filtrage est conçu pour effectuer une transposition de fréquence.

## FIG. 1

## FIG. 2

FIG. 3

FIG. 4

FIG. 5

FIG. 6

FIG. 7

# FIG. 8

$_{cos}W_{kn}$

32 a

34 a

36

$S_{(n)}$ — 30.a — X — LPF — DECIMATOR — CODER

$a_{kn}$

30 b — 32 b — 34 b

X — LPF — DECIMATOR

$b_{kn}$

$_{sin}W_{kn}$

# FIG. 9(PRIOR ART)

in — DECIMATOR

50

$u_1$ — A F1 — 52-1

$u_2$ — A F2 — 52-2

$u_3$ — A F3 — 52-3

$u_m$ — A F$_M$ — 52-M

FREQUENCY TRANSITION MEANS

54

→ S₁

→ S₂

→ S₃

→ S$_m$

# FIG. 10(PRIOR ART)

$H_{(f)}$

$0$    $F_B$    $F$

# FIG. 11(PRIOR ART)

$h_{(t)}$

$h_0$   $h_1$   $h_2$   $h_3$

$T_1$

$0$  $1$  $2$  $3$  $4$  $5$  $6$   $t$

# FIG. 12(PRIOR ART)

$B_1$   $B_2$   $B_M$

$F_s/2$

## FIG. 13 (PRIOR ART)

$a_{0m}$    $a_{2m}$    $a_{4m}$    $a_{(n-1)m}$

$a_{1m}$    $a_{3m}$    $a_{nm}$

## FIG. 14 (PRIOR ART)

INPUT MEMORY 70

MULTIPLIER 76

ACCUMULATOR 78

MEMORY CONTROLLER 74

FILTER COEFFICIENT MEMORY 72

# FIG. 15A
## (PRIOR ART)

ADDRESS

| | |
|---|---|
| 0 | CHANNEL 1 COSINE COMPONENT FILTER COEFFICIENTS |
| 79 | |
| 80 | CHANNEL 1 SINE COMPONENT FILTER COEFFICIENTS |
| 159 | |
| 160 | CHANNEL 2 COSINE COMPONENT FILTER COEFFICIENTS |
| 239 | |
| 240 | CHANNEL 2 SINE COMPONENT FILTER COEFFICIENTS |
| 319 | |
| 320 | CHANNEL 3 COSINE COMPONENT FILTER COEFFICIENTS |
| 399 | |
| 400 | CHANNEL 3 SINE COMPONENT FILTER COEFFICIENTS |
| 479 | |
| 489 | CHANNEL 4 COSINE COMPONENT FILTER COEFFICIENTS |
| 559 | |
| 560 | CHANNEL 4 SINE COMPONENT FILTER COEFFICIENTS |
| 639 | |

# FIG. 15B
## (PRIOR ART)

ADDRESS

| | |
|---|---|
| 0 | h0 $\cos(2\pi(0/D)J)$ |
| 1 | h1 $\cos(2\pi(1/D)J)$ |
| 2 | h2 $\cos(2\pi(2/D)J)$ |
| 79 | h79 $\cos(2\pi(79/D)J)$ |
| 80 | h0 $\sin(2\pi(0/D)J)$ |
| 81 | h1 $\sin(2\pi(1/D)J)$ |
| 82 | h2 $\sin(2\pi(2/D)J)$ |
| 159 | h79 $\sin(2\pi(79/D)J)$ |

IN CASE OF THE
NUMBER OF FILTER TAPS
M=80

## FIG. 16 (PRIOR ART)

EP 0 593 850 B1

# FIG. 17

# FIG. 18

# FIG. 19

# FIG.20